# EUROPEAN PATENT APPLICATION

(11) **EP 1 643 722 A1**
(43) Date of publication of application: **05.04.2006**
(21) Application number: 05292012.1
(22) Date of filing: 28.09.2005
(51) Int. Cl.: H04L 29/06, H04M 1/64

(54) **Automated real-time transcription of phone conversations**

(30) Priority: 29.09.2004 US 953928
(71) Applicant: Avaya Technology Corp., Basking Ridge, NJ 07920 (US)
(72) Inventor: Tankhiwale, Kautsubha A., Ocean, NJ 07712 (US)
(74) Representative: Thévenet, Jean-Bruno

(57) **Abstract**

An enhanced softphone (200) utilizes a simulated audio device driver (222) as an interface with a speech recognition application (224), providing automatically generated transcripts of voice conversations carried over a communications network (120). The simulated audio device driver (222) controls transmission of digitized audio from an audio control library (107) to the speech recognition application (224). Digitized audio originating at the softphone is received by the audio control library as a first stream. Digitized audio terminating at the softphone is received by the audio control library as a second stream. The simulated audio device driver appends a first label to the first stream, and appends a second label to the second stream. The appended first stream and the appended second stream are transmitted to the speech recognition application for use in generating a transcript of a telephone conversation.

## Description

### BACKGROUND OF THE INVENTION

### 1. Field of the Invention

The invention relates generally to communication networks and, more specifically, to techniques for using speech recognition software to automatically generate a transcription of a voice conversation carried over a communication network.

### 2. Description of Related Art

In many situations, it would be useful to create a record of dialogue that takes place during a telephone conversation. At present, such records may be prepared using electronic recording techniques that record both sides of a conversation as the dialogue unfolds. Electronic recording is a resource-intensive procedure that, as a practical matter, must be administered by a telecom/application support group. Ongoing maintenance issues require recurring computer-telephony integration (CTI) support, oftentimes resulting in significant expenditures. Accordingly, most electronic recording installations are designed for enterprise-wide deployment where ongoing maintenance costs are distributed amongst a large number of telephone users. Typical costs range from hundreds to thousands of dollars per annum for each telephone line to be recorded, in addition to related expenses incurred for specialized hardware and software. Accordingly, electronic call recording is best suited to high-volume call centers, and is impractical for individuals and many small enterprises.

Electronic call recording raises serious legal concerns. In the United States, call recording software must be equipped with the functionalities necessary to ensure compliance with a multiplicity of federal and state laws applicable to call participants. More specifically, call recording software must be capable of ascertaining the geographic locations of all call participants, since each of the fifty states have a set of unique laws governing call recording. For example, some states require that only one party be aware of the recording, other states require all parties to know, and one state (i.e., Delaware) prohibits call recording altogether. Since electronic call recording requires ongoing technical maintenance and is the subject of strict legal scrutiny, it would be desirable to develop alternative techniques for creating a record of dialogue that takes place during a telephone conversation. At the same time, technological innovation is transforming the manner in which telephone calls are placed and received. For example, softphones (also referred to as software-based telephonic devices) are experiencing increased popularity. A softphone may be defined as a software application that provides one or more capabilities associated with a conventional telephone, such as call control and audio functionalities. Call control functionalities typically include the ability to participate in conference calls, to place callers on hold, to transfer callers to another number, and to drop callers. Audio functionalities include the ability to talk and listen to callers.

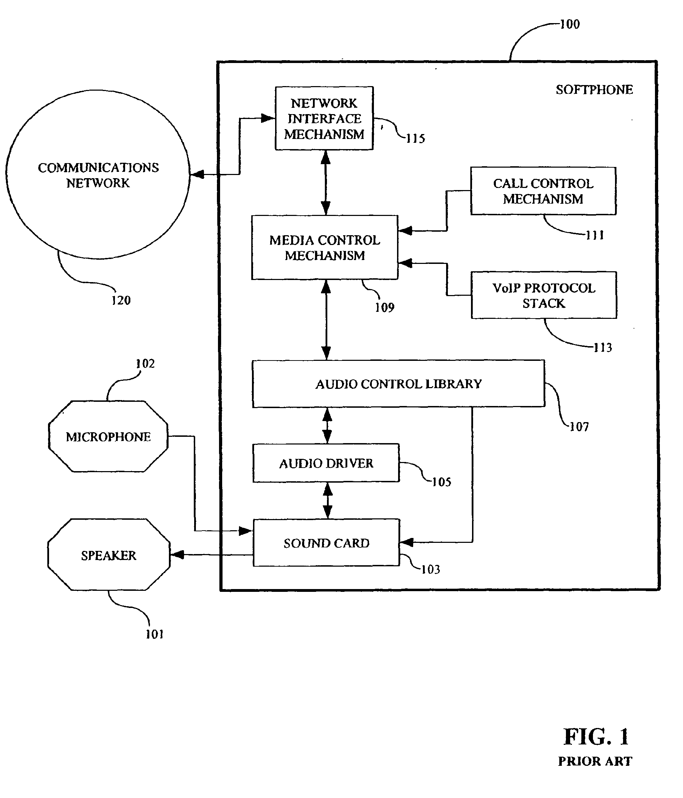

FIG. 1 sets forth an illustrative architectural configuration for a prior art softphone 100. A microphone 101 converts acoustical vibrations into electronic audio signals. A sound card 103 receives electronic audio signals from microphone 101, and converts the received signals into digitized audio. Sound card 103 is controlled by an audio driver 105. Audio driver 105 comprises one or more computer-executable processes for controlling sound card 103 using an audio control library 107. Audio control library 107 includes one or more computer-executable processes for controlling transmission of electronic audio signals from microphone 101 to sound card 103, and for controlling transmission of digitized audio from sound card 103 to audio driver 105.

Under the control of audio control library 107, digitized audio transmitted from sound card 103 to audio driver 105 is sent to a media control mechanism 109. Media control mechanism 109 is equipped to process digitized audio based upon information received from a call control mechanism 111 and a Voice over Internet Protocol (VoIP) Stack 113, and to organize digitized audio into a stream of packets. Call control mechanism 111 uses VolP Stack 113 to define the manner in which a plurality of call states are maintained. The plurality of call states include at least one of ringing, on hold, or participating in a conference. A network interface mechanism 115 transmits the stream of packets generated by the media control mechanism 109 over a communications network 120.

Network interface mechanism 115 is also equipped to receive a stream of packets over communications network 120, and to forward the stream of packets to media control mechanism 109. Media control mechanism 109 process the incoming stream of packets based upon information received from call control mechanism 111 and Voice over Internet Protocol (VoIP) Stack 113, so as to construct digitized audio from the stream of packets. Call control mechanism 111 uses VolP Stack 113 to defines the manner in which a plurality of call states are maintained. The plurality of call states include at least one of ringing, on hold, or participating in a conference.

Under the control of audio control library 107, digitized audio received from media control mechanism 109 is transmitted from audio driver 105 to sound card 103. In addition to the capabilities described above, audio control library 107 includes one or more computer-executable processes for controlling transmission of digitized audio from audio driver 105 to sound card 103, and for controlling transmission of electronic audio signals from sound card 103 to speaker 102. Sound card 103 converts digitized audio received from audio driver 105 into electronic audio signals for transmission to speaker 102. Speaker 102 converts electronic audio signals into acoustical vibrations.

As softphone use becomes more commonplace, voice-related productivity tools are becoming increasingly prevalent on many PC desktops. Productivity tools, such as IBM Dragon Dictate and the SAPI interface in Microsoft Windows XP Professional, provide speech recognition and transcription capabilities. Unfortunately, no suitable mechanism exists for combining softphones with voice-related productivity tools in a manner such that these tools may be utilized to generate a record of dialogue that takes place during a telephone conversation.

### SUMMARY OF THE INVENTION

An enhanced softphone utilizes a simulated device driver as an interface with a speech recognition application, providing automatically generated transcripts of voice conversations carried over a communications network. The voice conversations will typically include an audio signal originating at the softphone, such as the softphone user's voice, and an audio signal terminating at the softphone, such as the voice of anyone else in communication with the softphone user over the communication network. The simulated device driver controls transmission of digitized audio from an audio control library to the speech recognition application. Digitized audio received from an enhanced softphone user is received by the audio control library as a first stream. Digitized audio received from one or more conversation participants other than the enhanced softphone user is received by the audio control library as a second stream. The audio control library transmits the first stream and the second stream to the simulated audio device driver. The simulated audio device driver appends a first label to the first stream, thereby generating an appended first stream. The simulated audio device driver appends a second label to the second stream, thereby generating an appended second stream. The simulated audio device driver transmits the appended first stream and the appended second stream to the speech recognition application. The speech recognition application uses the appended first stream and the appended second stream to generate a transcript of a telephone conversation. The transcript is generated in the form of at least one of a printout, a screen display, and an electronic document.

Pursuant to a further embodiment of the invention, as a voice conversation progresses, a microphone converts acoustical vibrations into electronic audio signals. A sound card receives electronic audio signals from the microphone, and converts the received signals into digitized audio. The sound card is controlled by an audio driver comprising one or more computer-executable processes for controlling the sound card using the audio control library. The audio control library includes one or more computer-executable processes for controlling transmission of electronic audio signals from the microphone to the sound card, and for controlling transmission of digitized audio from the sound card to the audio driver.

Under the control of the audio control library, digitized audio transmitted from the sound card to the audio driver is sent to a media control mechanism. The media control mechanism is equipped to process digitized audio based upon information received from a call control mechanism and a Voice over Internet Protocol (VolP) Stack, and to organize digitized audio into a stream of packets. The call control mechanism uses VolP Stack to defines the manner in which a plurality of call states are maintained. The plurality of call states include at least one of ringing, on hold, or participating in a conference. A network interface mechanism transmits the stream of packets generated by media control mechanism over a communications network.

The network interface mechanism is also equipped to receive a stream of packets over the communications network, and to forward the stream of packets to the media control mechanism. The media control mechanism processes the incoming stream of packets based upon information received from the call control mechanism and the Voice over Internet Protocol (VoIP) Stack, so as to construct digitized audio from the stream of packets. The call control mechanism uses the VolP Stack to define the manner in which a plurality of call states are maintained. The plurality of call states include at least one of ringing, on hold, or participating in a conference.

Under the control of the audio control library, digitized audio received from the media control mechanism is transmitted from the audio driver to the sound card. In addition to the capabilities described above, the audio control library includes one or more computer-executable processes for controlling transmission of digitized audio from the audio driver to the sound card, and for controlling transmission of electronic audio signals from the sound card to the speaker. The sound card converts digitized audio received from the audio driver into electronic audio signals for transmission to the speaker. The speaker converts electronic audio signals into acoustical vibrations.

The transcripts generated in accordance with the present invention can be used by call center managers for training customer service representatives, tracking orders, and documenting customer complaints. Federal agencies could utilize printed transcripts of telephone conversations in connection with homeland security initiatives. Individual telephone users could utilize printed transcripts for documenting important conversations held with bank officials, insurance claims adjusters, attorneys, credit card issuers, and business colleagues. The transcript generating techniques of the present invention do not require electronic recording of a telephone conversation, thereby avoiding the strict legal ramifications governing such recording.

The various features of novelty which characterize the invention are pointed out with particularity in the claims annexed to and forming a part of the disclosure. For a better understanding of the invention, its operating advantages, and specific objects attained by its use, reference should be had to the drawing and descriptive matter in which there are illustrated and described preferred embodiments of the invention.

### BRIEF DESCRIPTION OF THE DRAWINGS

In the drawings:

FIG. 1 sets forth an illustrative architectural configuration for a prior art softphone.

FIG. 2 sets forth an exemplary architectural configuration of an enhanced softphone constructed in accordance with the present invention.

FIGs. 3A and 3B set forth an operational sequence implemented by the architectural configuration of FIG. 2.

FIG. 4 sets forth an exemplary transcript of a voice conversation prepared using the architectural configuration of FIG. 2.

### DETAILED DESCRIPTION OF THE PRESENTLY PREFERRED EMBODIMENTS

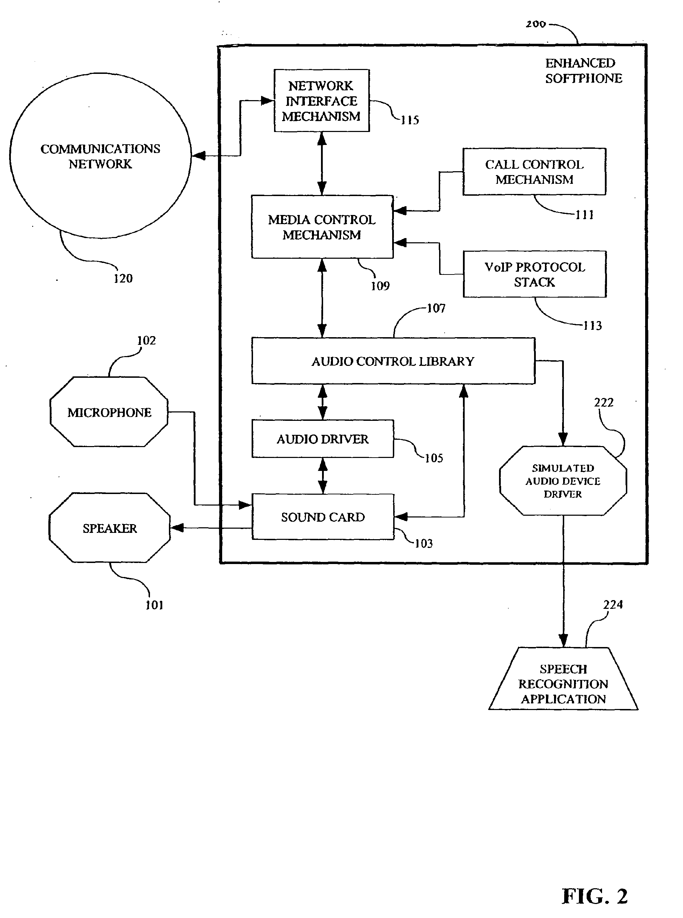

FIG. 2 sets forth an exemplary architectural configuration of an enhanced softphone 200 constructed in accordance with the present invention. Enhanced softphone 200 utilizes a simulated audio device driver 222 as an interface with a speech recognition application 224, providing automatically generated transcripts of voice conversations carried over a communications network 120. Simulated audio device driver 222 controls transmission of digitized audio from an audio control library 107 to speech recognition application 224.

As a voice conversation progresses, a microphone 102 converts acoustical vibrations into electronic audio signals. A sound card 103 receives electronic audio signals from microphone 101, and converts the received signals into digitized audio. Sound card 103 is controlled by an audio driver 105. Audio driver 105 comprises one or more computer-executable processes for controlling sound card 103 using the audio control library 107. Audio control library 107 includes one or more computer-executable processes for controlling transmission of electronic audio signals from microphone 101 to sound card 103, and for controlling transmission of digitized audio from sound card 103 to audio driver 105.

Under the control of audio control library 107, digitized audio transmitted from sound card 103 to audio driver 105 is sent to a media control mechanism 109. Media control mechanism 109 is equipped to process digitized audio based upon information received from a call control mechanism 111 and a Voice over Internet Protocol (VoIP) Stack 113, and to organize digitized audio into a stream of packets. Media control mechanism 109 may be used to send and receive audio to and from a media server, such as an IP PBX, that is in communication with communications network 120. Call control mechanism 111 uses VolP Stack 113 to define the manner in which a plurality of call states are maintained. The plurality of call states include at least one of ringing, on hold, or participating in a conference. The specific implementational details of VolP Protocol Stack depends upon the VolP technology used, such as H.323 or SIP. A network interface mechanism 115 transmits the stream of packets generated by media control mechanism 109 over a communications network 120.

Network interface mechanism 115 is also equipped to receive a stream of packets over communications network 120, and to forward the stream of packets to media control mechanism 109. Media control mechanism 109 process the incoming stream of packets based upon information received from call control mechanism 111 and Voice over Internet Protocol (VoIP) Stack 113, so as to construct digitized audio from the stream of packets. Call control mechanism 111 uses VolP Stack 113 to defines the manner in which a plurality of call states are maintained. The plurality of call states include at least one of ringing, on hold, or participating in a conference.

Under the control of audio control library 107, digitized audio received from media control mechanism 109 is transmitted from audio driver 105 to sound card 103. In addition to the capabilities described above, audio control library 107 includes one or more computer-executable processes for controlling transmission of digitized audio from audio driver 105 to sound card 103, and for controlling transmission of electronic audio signals from sound card 103 to speaker 102. Sound card 103 converts digitized audio received from audio driver 105 into electronic audio signals for transmission to speaker 102. Speaker 102 converts electronic audio signals into acoustical vibrations.

Digitized audio transmitted from sound card 103 to audio driver 105 is received by audio control library 107 as a first stream. Digitized audio transmitted from audio driver 105 to sound card 103 is received by audio control library 107 as a second stream. Audio control library 107 transmits the first stream and the second stream to simulated audio device driver 222, which appends a first label to the first stream, thereby generating an appended first stream. Simulated audio device driver 222 appends a second label to the second stream, thereby generating an appended second stream. The appended first stream and the appended second stream we then transmitted to speech recognition application 224.

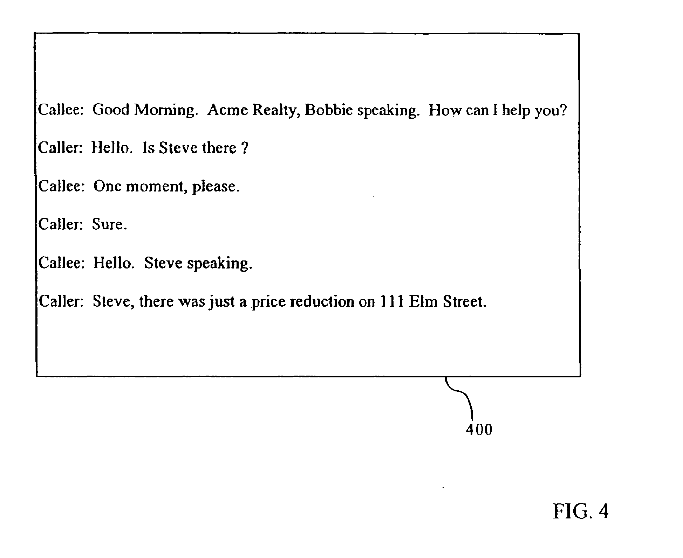

Speech recognition application 224 uses the appended first stream and the appended second stream to generate a transcript 400 (FIG. 4) of a telephone conversation. Transcript 400 is generated in the form of at least one of a printout, a screen display, and an electronic document. Illustratively, transcript 400 could be used by call center managers for training customer service representatives, tracking orders, and documenting customer complaints. Federal agencies could utilize transcripts of telephone conversations in connection with homeland security initiatives. Individual telephone users could utilize transcripts for documenting important conversations held with bank officials, insurance claims adjusters, attorneys, credit card issuers, and business colleagues. Since generation of transcript 400 does not require electronic recording of a telephone conversation, the strict legal considerations governing such recording do not apply to the transcription techniques of the present invention.

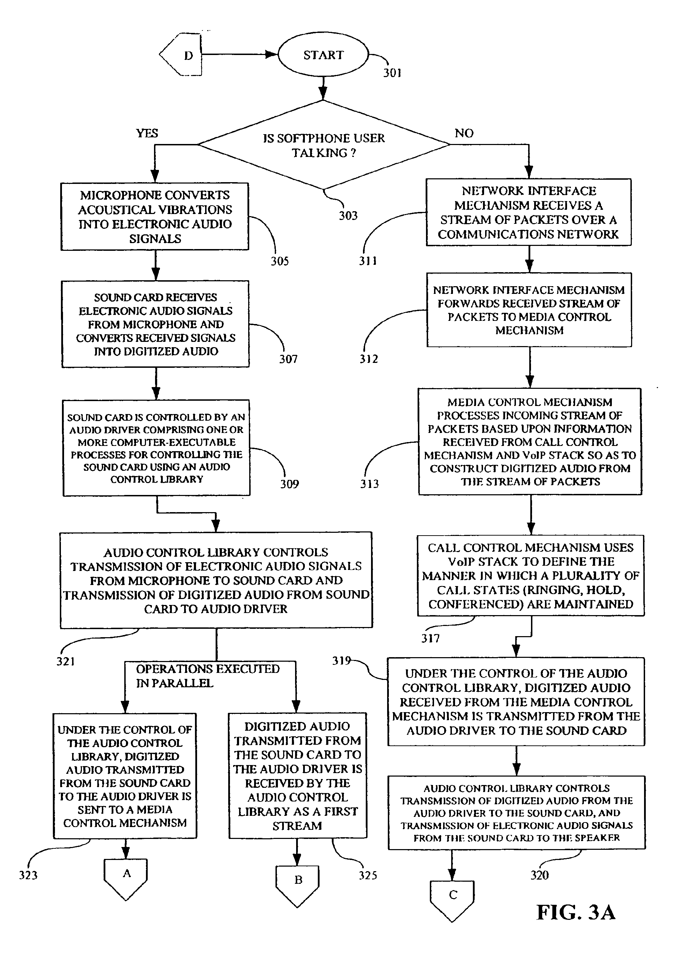

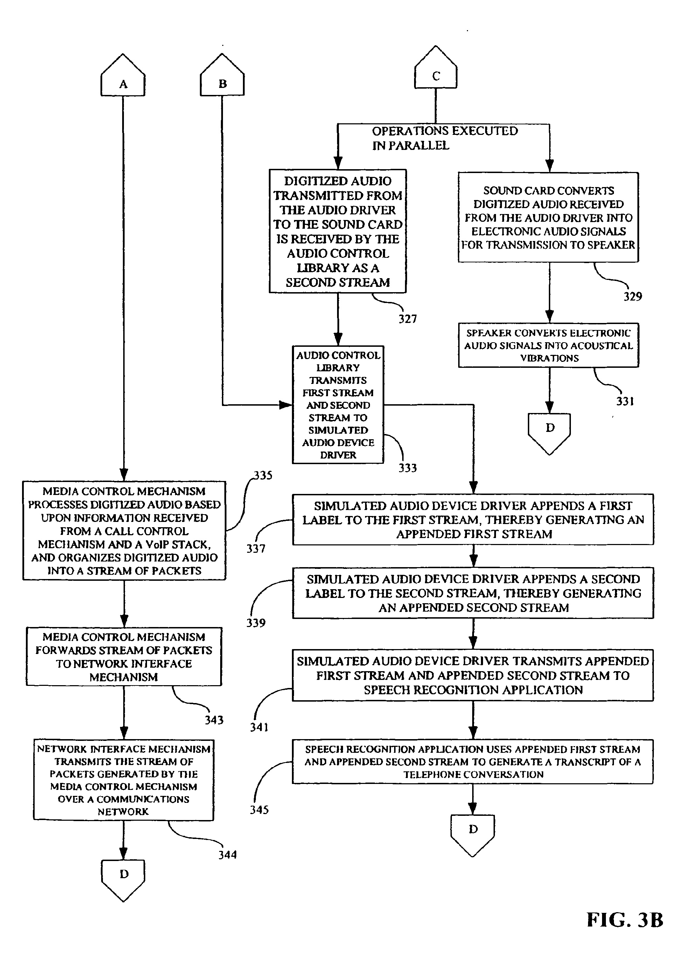

FIGs. 3A and 3B set forth an operational sequence implemented by the architectural configuration of FIG. 2. The operational sequence commences at block 301. At block 303, a test is performed to ascertain whether a softphone user is talking. If the user is talking, the program proceeds to block 305. If the user not talking, the program proceeds to block 311.

At block 305, as a voice conversation progresses, microphone 101 (FIG. 2) converts acoustical vibrations into electronic audio signals. Sound card 103 (FIG. 2) receives electronic audio signals from the microphone, and converts the received signals into digitized audio (FIG. 3A, block 307). Next, at block 309, the sound card is controlled by audio driver 105 (FIG. 2). The audio driver comprises one or more computer-executable processes for controlling the sound card using audio control library 107. The audio control library controls transmission of electronic audio signals from the microphone to the sound card, and controls transmission of digitized audio from the sound card to the audio driver (FIG. 3A, block 321).

After the operations of block 321 are performed, an operational sequence commencing at block 323 is performed substantially in parallel (i.e., substantially contemporaneously) with an operational sequence commencing at block 325. At block 323, under the control of the audio control library, digitized audio transmitted from the sound card to the audio driver is sent to a media control mechanism 109 (FIG. 2). The media control mechanism processes digitized audio based upon information received from a call control mechanism 111 and a Voice over Internet Protocol (VoIP) Stack 113, and organizes digitized audio into a stream of packets (FIG. 3B, block 335). At block 343, the media control mechanism forwards the stream of packets to a network interface mechanism 115 (FIG. 2). Next, at block 344 (FIG. 3B), the network interface mechanism transmits the stream of packets generated by the media control mechanism over a communications network 120. Thus, the media control mechanism may be used to send and receive audio to and from a media server, such as an IP PBX, that is in communication with communications network 120 (FIG. 2).

Recall that, at block 303, a test is performed to ascertain whether a softphone user is talking. If the user is not talking, the program proceeds to block 311 where the network interface mechanism receives a stream of packets over the communications network. At block 312, the network interface mechanism forwards the stream of packets to the media control mechanism. The media control mechanism process the incoming stream of packets based upon information received from the call control mechanism and the VolP Stack, so as to construct digitized audio from the stream of packets (block 313). The Call control mechanism uses the VolP Stack to define the manner in which a plurality of call states are maintained (block 317). The plurality of call states include at least one of ringing, on hold, or participating in a conference.

At block 319, under the control of the audio control library, digitized audio received from the media control mechanism is transmitted from the audio driver to the sound card. At block 320, the audio control library controls transmission of digitized audio from the audio driver to the sound card, and transmission of electronic audio signals from the sound card to the speaker. After the operations of block 320 are performed, an operational sequence commencing at block 327 is performed substantially in parallel (i.e., contemporaneously) with an operational sequence commencing at block 329. At block 329, the sound card converts digitized audio received from the audio driver into electronic audio signals for transmission to the speaker. The speaker converts electronic audio signals into acoustical vibrations (block 331).

As stated above, after the operations of block 320 are performed, an operational sequence commencing at block 327 is performed substantially in parallel (i.e., contemporaneously) with an operational sequence commencing at block 329. The operational sequence commencing at block 327 will now be described. Digitized audio transmitted from the audio driver to the sound card is received by the audio control library as a second stream (block 327). At block 333, the audio control library transmits the first stream received at block 325 and the second stream received at block 327 to simulated audio device driver 222 (FIG. 2). The simulated audio device driver appends a first label to the first stream, thereby generating an appended first stream (FIG. 3B, block 337). The simulated audio device driver appends a second label to the second stream, thereby generating an appended second stream (block 339). At block 341, the simulated audio device driver transmits the appended first stream and the appended second stream to speech recognition application 224 (FIG. 2). At block 345 (FIG. 3B), the speech recognition application uses the appended first stream and the appended second stream to generate a transcript of a telephone conversation 400 (FIG. 4). The transcript is generated in the form of at least one of a printout, a screen display, and an electronic document.

The first label appended to the first stream is used to identify dialogue spoken by the user of the enhanced softphone 200, whereas the second label appended to the second stream is used to identify dialogue spoken by a participant other than the user of the enhanced softphone 200. For example, in cases where the user of the enhanced softphone 200 initiates a call, enhanced softphone 200 is programmed to append an exemplary first label, such as "caller" and an exemplary second label, such as "callee". In cases where the user of the enhanced softphone 200 receives a call placed by a third party, enhanced softphone 200 is programmed to append an exemplary first label of "callee" and an exemplary second label of "caller". If the first and second labels are not appended to the first and second streams, speech recognition application 224 (FIG. 2) will be unable to differentiate between call participants. Simulated audio device driver 222 may buffer the first and second streams, adding labels such as "Caller" and "Callee" before each party speaks, since the device driver is able to ascertain the source of the stream. The buffer is useful since the step of appending the first and second labels will require additional time.

Thus, while there have shown and described and pointed out fundamental novel features of the invention as applied to a preferred embodiment thereof, it will be understood that various omissions and substitutions and changes in the form and details of the devices illustrated, and in their operation, may be made by those skilled in the art without departing from the spirit of the invention. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. An enhanced softphone for providing an automatically generated transcript of a voice conversation carried over a communications network, the enhanced softphone comprising:
a speech recognition application;
an audio control library for receiving digitized audio originating at said softphone end comprising a first stream of digitized audio and for receiving digitized audio terminating at said softphone end comprising a second stream of digitized audio; and
a simulated audio device driver for controlling transmission of digitized audio from the audio control library to the speech recognition application, said simulated audio device driver causing an appendage of a first label to the first stream to generate an appended first stream, causing an appendage of a second label to the second stream to generate an appended second stream, and causing transmission of the appended first stream and the appended second stream to the speech recognition application; and
wherein the speech recognition application uses the appended first stream and the appended second stream to generate a transcript of said voice conversation.

2. The enhanced softphone of claim 1 wherein the transcript is generated in the form of at least one of a printout, a screen display, and an electronic document.

3. A method of using a softphone to provide an automatically generated transcript of a voice conversation carried over a communications network, wherein the softphone comprises a speech recognition application, an audio control library for receiving digitized audio, and a simulated device driver for controlling transmission of digitized audio from the audio control library to the speech recognition application; the method comprising the steps of:
receiving, as a first stream at the audio control library, digitized audio originating at the softphone, and receiving, as a second stream at the audio control library, digitized audio terminating at the softphone;
transmitting the first stream and the second stream from the audio control library to the simulated audio device driver;
appending a first label to the first stream, thereby generating an. appended first stream, and appending a second label to the second stream, thereby generating an appended second stream;
transmitting the appended first stream and the appended second stream to the speech recognition application; and
generating a transcript of the telephone conversation using the appended first stream and the appended second stream.

4. The method of claim 3 wherein the transcript is generated in the form of at least one of a printout, a screen display, and an electronic document.

5. An enhanced softphone for providing an automatically generated transcript of a voice conversation carried over a communications network, the enhanced softphone comprising:
a sound card for converting electronic audio signals into digitized audio and for converting digitized audio into electronic audio signals;
a microphone for inputting electronic audio signals to the sound card;
a speaker for receiving electronic audio signals from the sound card;
a speech recognition application;
an audio control library comprising one or more computer-executable processes for controlling transmission of digitized audio from the audio driver to the sound card, for controlling transmission of electronic audio signals from the sound card to the speaker, for controlling transmission of electronic audio signals from the microphone to the sound card, and for controlling transmission of digitized audio from the sound card to the audio driver;
an audio driver comprising one or more computer-executable processes for controlling the sound card using the audio control library;
a simulated device driver equipped to control transmission of digitized audio from the audio control library to the speech recognition application;
a Voice over Internet Protocol (VoIP) Stack;
a call control mechanism equipped to use the VoIP Stack to define the manner in which a plurality of call states are maintained;
a media control mechanism for processing digitized audio based upon information received from the call control mechanism and the VolP Stack, and for organizing digitized audio into a stream of packets; and
a network interface mechanism for transmitting the stream of packets generated by media control mechanism over a communications network, for receiving a received stream of packets over the communications network, and for forwarding the received stream of packets to the media control mechanism.

6. The enhanced softphone of claim 5 wherein the plurality of call states include at least one of ringing, on hold, or participating in a conference.

7. The enhanced softphone of claim 5 wherein the microphone converts acoustical vibrations into electronic audio signals, the sound card receiving electronic audio signals from the microphone, and converting the received signals into digitized audio;
wherein, under the control of the audio control library, digitized audio transmitted from the sound card to the audio driver is sent to the media control mechanism;
wherein, under the control of the audio control library, digitized audio received from the media control mechanism is transmitted from the audio driver to the sound card; and
wherein the sound card converts digitized audio received from the audio driver into electronic audio signals for transmission to the speaker, and the speaker converts electronic audio signals into acoustical vibrations.

8. The enhanced softphone of claim 7 wherein digitized audio transmitted from the sound card to the audio driver is received by the audio control library as a first stream, and digitized audio transmitted from the audio driver to the sound card is received by the audio control library as a second stream.

9. The enhanced softphone of claim 8 wherein the audio control library transmits the first stream and the second stream to the simulated audio device driver.

10. The enhanced softphone of claim 9 wherein the simulated audio device driver appends a first label to the first stream, thereby generating an appended first stream, and the simulated audio device driver appends a second label to the second stream, thereby generating an appended second stream.

11. The enhanced softphone of claim 10 wherein the simulated audio device driver transmits the appended first stream and the appended second stream to the speech recognition application.

12. The enhanced softphone of claim 11 wherein the speech recognition application uses the appended first stream and the appended second stream to generate a transcript of a telephone conversation.

13. The enhanced softphone of claim 12 wherein the transcript is generated in the form of at least one of a printout, a screen display, and an electronic document.
